Europäisches Patentamt

(19) European Patent Office

Office européen des brevets

(11) Veröffentlichungsnummer: **0 059 255
B1**

(12) **EUROPÄISCHE PATENTSCHRIFT**

(45) Veröffentlichungstag der Patentschrift:
24.10.84

(21) Anmeldenummer: **81109256.8**

(22) Anmeldetag: **29.10.81**

(51) Int. Cl.³: **H 02 B 13/02**

(54) **Metallgekapselte, gasgefüllte, dreipolige Mittelspannungs-Lastschaltanlage.**

(30) Priorität: **02.03.81 DE 3107911**

(43) Veröffentlichungstag der Anmeldung:
**08.09.82 Patentblatt 82/36**

(45) Bekanntmachung des Hinweises auf die Patenterteilung:
**24.10.84 Patentblatt 84/43**

(84) Benannte Vertragsstaaten:
**AT CH FR GB IT LI SE**

(56) Entgegenhaltungen:
**DE - A - 2 729 571
DE - A - 2 733 777
FR - A - 2 259 459**

**Prospekt der Fa. Pfisterer, Kopex-Schaltanlagen, Reihe
10N/20N,SF6-gasisoliert, April 1979**

(73) Patentinhaber: **Siemens Aktiengesellschaft, Berlin und
München Wittelsbacherplatz 2, D-8000 München 2 (DE)**

(72) Erfinder: **Grünberg, Kurt, Fritz Reymstrasse 7,
D-6050 Offenbach (DE)**
Erfinder: **Werner, Peter, Eichenstrasse 21,
D-6370 Oberursel (DE)**
Erfinder: **Schweppe, Friedrich, Waldstrasse 27,
D-6116 Epperthausen (DE)**
Erfinder: **Poth, Rainer, Freiherr v. Steinstrasse 2,
D-6368 Bad Vilbel 4 (DE)**
Erfinder: **Koch, Kurt, Kirchstrasse 11,
D-6078 Neu-Isenburg (DE)**
Erfinder: **Voigtländer, Kurt, Tulpenhofstrasse 24,
D-6050 Offenbach (DE)**

## Beschreibung

Die Erfindung bezieht sich auf eine metallge-kapselte dreipolige Mittelspannungs-Lastschalt-anlage nach dem Oberbegriff des Anspruches 1.

Es ist bereits eine Mittelspannungs-Lastschaltanlage der im Oberbegriff des Anspruches 1 gennanten Art bekannt, bei der die Sicherungen in einem seitlich an die Anlage angereihten Gehäuse untergebracht sind. (Prospekt der Fa. Pfisterer, „Kapex-Schaltanlagen" Reihe 10 N/20 N, SF$_6$-gasisoliert, April 1979.)

Es ist ferner eine Mittelspannungs-Lastschaltanlage bekannt, bei welcher eine sich über einen längeren Zeitraum erstreckende Wartungsfreiheit angestrebt wurde, zusammen mit äusserst gerin-gen Abmessungen und kostengünstiger Herstell-barkeit (DE-A Nr. 2729571).

Bekannt ist es auch, bei gasisolierten Schaltanlagen zur Erhöhung der Druckfestigkeit zylindri-sche oder kugelförmige Kapselungteile zu ver-wenden (DE-A Nr. 2733777).

Aufgabe der Erfindung ist es, die Mittelspannungs Lastschaltanlage, der im Oberbegriff des Anspruches 1 gennanten Gattung so auszubilden, dass sie nur eine geringe Stellfläche erfordert, weit über die bislang übliche Zeit wartungsfrei sowie äusserst klimafest und, bei besonders übersichtlicher Bauweise, unempfindlich gegen durch innere oder äussere Temperatureinflüsse hervorgerufene Druckschwankungen ist.

Die gestellte Aufgabe wird erfindungsgemäss durch die im kennzeichnenden Teil des Anspruches 1 angegebene Ausbildung gelöst.

Die Schaltanlage ist besonders vorteilhaft für Netzstationen, zum Verbinden und Schalten eines Ringkabelfeldes sowie zum Anschluss und zum Schalten eines Abzweiges geeignet.

Zweckmässige Aus- und Weiterbildungen des Erfindungsgegenstandes sind in den Ansprüchen 2 bis 7 angegeben.

Ein Ausführungsbeispiel der Erfindung ist in der Zeichnung rein schematisch dargestellt. Es zeigen:

Fig. 1 eine Frontansicht in Schnitt nach Linie I-I in Fig. 2,

Fig. 2 eine Seitenansicht im Schnitt nach Linie II-II in Fig. 1, und

Fig. 3 ein Schaltbild.

Bei der dargestellten gekapselten elektrischen Mittelspannungs-Lastschaltanlage besteht die Kapselung aus einem Metallgehäuse 1, das elektronegatives Gas enthält.

Im Metallgehäuse 1, das vorzugsweise aus nichtrostendem Stahl besteht, ist eine Lastschalteinrichtung angeordnet, deren Bedienungsmittel gasdicht nach aussen Geführt sind. Die Last-schalteinrichtung und die Bedienungsmittel wer-den an anderer Stelle näher beschrieben.

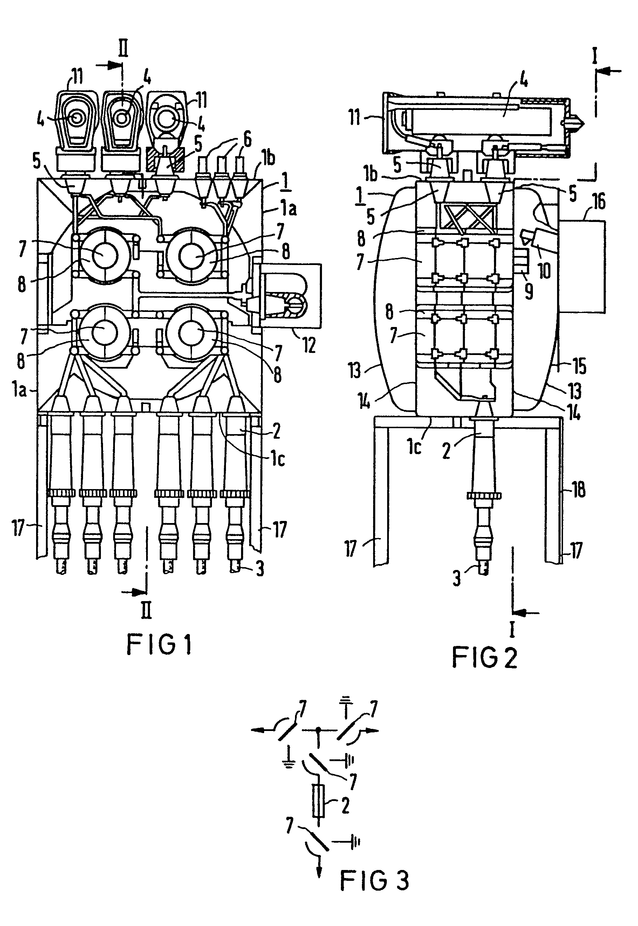

Das Metallgehäuse 1 ist etwa quaderförmig. Es weist gasdichte Durchfürungen 2 für anzuschliessende Kabel 3 auf und trägt eine umschlossene Schmelzsicherungseinrichtung mit drei Schmelz-sicherungen 4. Der Schmelzsicherungseinrich-tung sind Durchführungen 5 zugeordnet. Das Metallgehäuse 1 besitzt ferner noch einen Transformatorabzweig 6 (Fig. 1).

Eine besondere Eigenschaft des Metallgehäuses 1 besteht darin, dass es zugangslos verschlossen ist. Darunter ist zu verstehen, dass es nach dem Einbringen seiner Einbauten ringsum zugeschweisst wird.

Die bereits erwähnte Schalteinrichtung besteht aus wenigstens dreiphasigen Dreistellungs-Drehschaltern 7. Im dargestellten Beispiel sind vier Drehschalter 7 vorgesehen. Die Drehschalter 7 sind untereinander gleichgerichtet parallel zu zwei Seitenwänden 1a sowie der Kopfwand 1b und dem Boden 1c des Metallgehäuses 1 im Metallgehäuse 1 angeordnet.

Die Drehschalter 7 sind in die Schaltstellung 0, 1, Erde schaltbar und in der aus Fig. 3 ersichtlichen Weise elektrisch untereinander verbunden.

Jede der Drehschalter 7 ist in einem aus zwei Schalen bestehenden Isolierstoffgehäuse 8 angeordnet. Die Isolierstoffgehäuse 8 enthalten elektronegative Gas, das mit dem elektronegativen Gas des Metallgehäuses 1 in Verbindung steht.

Die Isolierstoffgehäuse 8 sind jeweils Träger der in ihnen befindlichen Drehschalter 7.

Die Bedienungsmittel der Drehschalter 7 bestehen jeweils aus einer Schaltwelle 9 und einem Fortsatz 10 (Fig. 2).

Wie aus der Zeichnung ersichtlich ist, sind die Durchführungen 2 für die anzuschliessenden Ka-bel 3 im Boden 1c des Metallgehäuses 1 parallel zu Front der Drehschalter 7 nebeneinander angeordnet.

Die Schmelzsicherungseinrichtung mit den Schmelzsicherungen 4 befindet sich auf der Ober-seite 1b des Metallgehäuses 1.

Die der Schmelzsicherungseinrichtung zugehörigen Durchführungen 5 sind auf der Oberseite 1b des Metallgehäuses 1 befestigt und zwar in zwei zueinander parallelen Reihen zu je drei Durchführungen 5. Die Reihen der Durchführungen 5 verlaufen parallel zu den Durchführungen 2 im Boden 1c des Metallgehäuses 1.

Die Umschliessung der Schmelzsicherungseinrichtung ist aus Isolierstoffkapseln 11 gebildet, die jeweil einer Schmelzsicherung 4 zugeordnet sind. Jede Isolierstoffkapsel 11 ist auf zwei Durchführungen 5 abnehmbar befestigt und zwar auf je einer Durchführung 5 jeder der Durchführungsreihen.

Auch der Transformatorabzweig 6 ist auf der Oberseite 1b des Metallgehäuses 1 angeordnet. Er besteht aus drei Durchführungen.

An einer der Seitenwände 1a des Metallgehäu-ses 1 ist ein Erweiterungsanschluss 12 vorgesehen (Fig. 1).

Für die Dichtigkeit des Metallgehäuses 1 ist es wichtig, dass es bei Druckschwankungen des elektronegativen Gases, wenn überhaupt, nur we-nig nachgibt. Druckschwankungen des elektrone-gativen Gases können durch äussere Temperatureinflüsse und/oder durch innere Temperatureinflüsse entstehen. Um solche Druckschwankungen auffangen zu können, ist das Metallgehäuse 1 in besonderer Weise ausgebildet. Seine vor der Front der Drehschalter 7 liegende Wand und die dazu parallele rückwärtige Wand weisen jeweils ein zentrisch aus der Wandebene herausragende biegesteife Kesselwand 13 auf (Fig. 2).

Die vor der Front der Drehschalter 7 angeordnete Kesselwand 13 ist von dem Fortsatzt 10 jeder Schaltwelle 9 durchgriffen. Der Durchgriff erfolgt durch in der entsprechenden Kesselwand 13 angeordnete, nach aussen gerichtete Durchzüge (nicht dargestellt).

Im dargestellten Beispiel erstrecken sich die Isolierstoffgehäuse 8 der Drehschalter 7 zwischen zwei Montageplatten 14, an welchen die Stirnseiten der Isolierstoffgehäuse befestigt sind und welche ihrerseits im Metallgehäuse 1 verankert sind (Fig. 2).

Zur weiteren Verstärkung des Metallgehäuses 1 können an den planen Gehäusewänden Verstärkungsrippen vorgesehen sein, die jedoch der besseren Übersicht wegen nicht dargestellt sind.

Vor der von den Fortsätzen 10 der Schaltwellen 9 durchgriffenen Kesselwand 13 ist ein Schild 15 angeordnet, das für jeden Drehschalter 7 einen Antrieb 16 trägt. Es ist der besseren Übersicht wegen nur ein Antrieb 16 dargestellt. Das Schild 15 kann beispielsweise von Stehbolzen getragen sein, die an der hinter ihm liegenden Kesselwand 13 befestigt sind.

Das Metallgehäuse 1 ist auf einem Gestell mit vier Beinen 17 angeordnet. Das Gestell weist an der Anlagenfront eine abnehmbare Abdeckung 18 auf, die in ihrer Bestimmungslage in Abhängigkeit von den Stellungen der Drehschalter 7 ver- und entriegelbar ist.

**Patentansprüche**

1. Metallgekapselte, gasgefüllte dreipolige Mittelspannungs-Lastschaltanlage, mit den Merkmalen:

1.1 die Kapselung besteht aus einem etwa quaderförmigen druckfesten Gehäuse (1), das gasdicht verschlossen ist, ein elektronegatives Gas enthält und auf einem Gestell (17) ruht,

1.2 am Boden (1c) des Gehäuses (1) sind nebeneinander, parallel zur Front Kabeldurchführungen (2) angeordnet,

1.3 am Gehäuse (1) sind ferner Durchführungen (6) für Trafoabgänge vorgesehen, die durch Schmelzsicherungen (4) gesichert sind,

1.4 das Gehäuse umschliesst mindestens drei zueinander parallel angeordnet Lastschalter (7) mit Erdungseinrichtungen, wobei jeder Schalter ein offenes Isolierstoffgehäuse (8) und das Gehäuse (1) durchsetzende Bedienungsmittel aufweist,

gekennzeichnet durch die Kombination der Merkmale:

1.5 das Gehäuse (1) ist zugangslos verschlossen sowie

1.6 an der Front und der Rückseite mit jeweils einer ausgewölbten Kesselwand (13) versehen, 1.7 an einer Seitenwand (1a) des Gehäuses (1) ist ein Erweiterungsanschluss (12) angeordnet,

1.8 die Durchführungen (5) für die Schmelzsicherungen (4) befinden sich auf der Oberseite (1b) des Gehäuses und zwar in zwei zur Front parallelen Reihen,

1.9 die Schmelzsicherungen (4) sind jeweils von einer liegend anreihbaren Isolierstoffkapsel (11) umschlossen und auf zwei hintereinanderliegenden Durchführungen (5) aufgesteckt,

1.10 die Schalter (7) sind dreiphasige Dreistellungs-Drehschalter, deren Symmetrieachse senkrecht zur Front verläuft,

1.11 die das Gehäuse (1) durchsetzenden Bedienungsmittel verlaufen jeweils koaxial zum zugeordneten Isolierstoffgehäuse (8) und bestehen jeweils aus einer Schaltwelle (9) und einem die frontseitige Kesselwand (13) durchsetzenden Fortsatz (10),

1.12 die Durchführungen (6) für die Trafoabgänge sind ebenfalls auf der Oberseite (1b) des Gehäuses angeordnet.

2. Mittelspannungs-Lastschaltanlage nach Anspruch 1, dadurch gekennzeichnet, dass das Gehäuse (1) aus nichtrostendem Stahl besteht.

3. Mittelspannungs-Lastschaltanlage nach einem der Ansprüche 1 oder 2, dadurch gekennzeichnet, dass die Isolierstoffgehäuse (8) der Drehschalter (7) mindestens mit ihrer Front gemeinsam an einer Montageplatte (14) befestigt sind, die ihrerseits am Gehäuse (1) befestigt ist.

4. Mittelspannungs-Lastschaltanlage nach einem der Ansprüche 1 bis 3, dadurch gekennzeichnet, dass die planen Flächen des Gehäuses (1) mit Verstärkungsrippen versehen sind.

5. Mittelspannungs-Lastschaltanlage nach einem der Ansprüche 1 bis 4, dadurch gekennzeichnet, dass vor der von den Fortsätzen (10) der Schaltwellen (9) durchgriffenen Kesselwand (13) ein Schild (15) angeordnet ist, das für jeden Drehschalter (7) einen Antrieb (16) trägt.

6. Mittelspannungs-Lastschaltanlage nach einem der Ansprüche 1 bis 5, dadurch gekennzeichnet, dass die von den Fortsätzen (10) der Schaltwellen (9) durchgriffene Kesselwand (13) für den Durchgriff jedes Fortsatzes (10) einen nach aussen gerichteten Durchzug (20) aufweist.

7. Mittelspannungs-Lastschaltanlage nach einem der Ansprüche 1 bis 6, dadurch gekennzeichnet, dass das Gestell (17) des Metallgehäuses (1) zur Anlagenfront eine abnehmbare Abdeckung (18) aufweist, die in ihrer Bestimmungslage verriegelbar ist.

**Claims**

1. Metal-clad, gas-filled, three-pole, medium-voltage load-switching arrangement, having the following features:

1.1 the cladding consists of a pressure-proof, more or less parallelepipedic housing (1), which is sealed off in a gas-tight manner, contains electronegative gas and rests on a stand (17);

1.2 cable through-guides (2) are arranged on the base (1c) of the housing (1) adjacently to one another and parallel to the front;

1.3 through-guides (6) for transformer outlets are also provided on the housing (1), which are protected by fuses (4);

1.4 the housing (1) encloses at least three load switches (7), arranged parallel to one another, with earthing devices, each switch having an open housing (8) made of insulating material and operating means passing through the housing (1), characterised by the combination of the following features:

1.5 the housing (1) is closed off so as to be inaccessible, and

1.6 is provided with one outwardly domed wall (13) respectively on the front and rear;

1.7 an extension connection (12) is arranged on one side wall (1a) of the housing (1);

1.8 the trough-passages (5) for the fuses (4) are located on the top (1b) of the housing in two rows parallel to the front;

1.9 the fuses (4) are surrounded in each case by one horizontally attachable casing (11) made of insulating material and are pushed on to two trough-guides (5) lying one behind the other;

1.10 the switches (7) are three-phase, three-position rotary switches, whose axis of symmetry extends perpendicular to the front;

1.11 the operating means passing through the housing (1) extend in each case coaxially to the associated insulating-material housing (8) and consist in each case of a switching shaft (9) and an extension (10) passing through the front domed wall (13), and

1.12 the trough-guides (6) for the transformer outlets are also arranged on the top (1b) of the housing.

2. Medium-voltage load-switching arrangement according to Claim 1, characterised in that the housing (1) consists of rust-proof steel.

3. Medium-voltage load-switching arrangement according to one of Claims 1 or 2, characterised in that the insulating-material housings (8) of the rotary switches (7) are secured at least with their front to a common mounting plate (14), which in turn is secured to the housing (1).

4. Medium-voltage load-switching arrangement according to one of Claims 1 to 3, characterised in that the plane surfaces of the housing (1) are provided with reinforcement ribs.

5. Medium-voltage load-switching . arrangement according to one of Claims 1 to 4, characterised in that a plate (15) is arranged in front of the domed wall (13) penetrated by the extensions (10) of the switching shafts (9), which plate (15) bears a drive (16) for each rotary switch (7).

6. Medium-voltage loads-switching arrangement according to one of Claims 1 to 5, characterised in that the domed wall (13) penetrated by the extensions (10) of the switching shafts (9) has a passage (20) directed outwardly for the penetration of each extention (10).

7. Medium-voltage load-switching arrangement according to one of Claims 1 to 6, characterised in that the stand (17) of the metal housing (1) has a removable cover (18) on the front of the arrangement, which can be locked in its designated position.

**Revendications**

1. Appareillage tripolaire, à blindage métallique et rempli par un gaz, pour la commutation en charge de moyennes tensions, ayant pour caractéristiques:

1.1 l'enveloppe est constituée par un boîtier approximativement parallélépipédique (1) résistant à la pression, qui est fermé d'une façon étanche au gaz, contient un gaz électronégatif et est monté sur un châssis (17);

1.2 des passages (2) pour câbles sont disposés côte à côte et parallèlement à la face avant, sur le fond (1c) du boîtier (1);

1.3 dans le boîtier (1), il est en outre prévu des traversées (6) pour les départs en direction d'un transformateur, qui sont protégés par des fusibles (4);

1.4 le boîtier (1) entoure au moins trois commutateurs de puissance (7) montés en parallèle les uns avec les autres et comportant des dispositifs de mise à la terre, chaque commutateur possédant un boîtier en matériau isolant (8) ouvert et des moyens de commande traversant le boîtier (1), caractérisé par la combinaison des moyens suivants:

1.5 le boîtier (1) est fermé sans accès, et

1.6 il est équipé, sur sa face avant et sur sa face arrière, d'une paroi cintrée formant caisson (13);

1.7 une borne d'extension (12) est disposée sur une paroi latérale (1a) du boîtier (1);

1.8 les traversées (5) pour les fusibles (14) sont situées sur la face supérieure (1b) du boîtier, et ce suivant deux rangées parallèles à la face avant;

1.9 les fusibles (4) sont entourés chacun par un capot en matériau isolant (11) pouvant être disposé horizontalement en série et sont enfichés dans deux traversées (5) disposées en série;

1.10 les commutateurs (7) sont des commutateurs rotatifs triphasés à trois positions, dont l'axe de symétrie est perpendiculaire à la face avant;

1.11 les moyens de commande traversant le boîtier (1) sont coaxiaux chacun avec le boîtier associé au matériau isolant (8) et sont constitués chacun par un axe de commutation (9) et par un prolongement (10) traversant la paroi formant caisson (13) située sur la face avant, et

1.12 les traversées (6) pour les départs vers le transformateur sont disposées également sur la face supérieure (1b) du boîtier.

2. Appareillage de commutation en charge pour moyenne tension suivant la revendication 1, caractérisé par le fait que le boîtier (1) est constitué en acier inoxydable.

3. Appareillage de commutation en charge pour moyenne tension suivant l'une des revendications 1 ou 2, caractérisé par le fait que les boîtiers en matériau isolant (8) des commutateurs rotatifs (7) sont fixés, au moins par leur face avant, en commun sur une plaque de montage (14) qui est fixée pour sa part sur le boîtier (1).

4. Appareillage de commutation en charge pour moyenne tension suivant l'une des revendications 1 à 3, caractérisé par le fait que les surfaces planes du boîtier (1) sont munies de nervures de renforcement.

5. Appareillage de commutation en charge pour moyenne tension suivant l'une des revendications 1 à 4, caractérisé par le fait qu'en avant de la paroi formant caisson (13), traversée par les appendices saillants (10) des axes de commutation (9), se trouve disposé un écran (15) qui porte un système d'entraînement (13) pour chaque commutateur rotatif (7).

6. Appareillage de commutation en charge pour moyenne tension suivant l'une des revendications 1 à 5, caractérisé par le fait que la paroi formant caisson (13), qui est traversée par les appendices saillants (10) des axes de commutation (9), possède un perçage (20) dirigé vers l'extérieur et prévu pour la traversée de chaque appendice saillant (10).

7. Appareillage de commutation en charge pour moyenne tension suivant l'une des revendications 1 à 6, caractérisé par le fait que le châssis (17) du boîtier métallique (1) comporte, vers la face avant de l'installation, un capot amovible (18) qui peut être verrouillé dans sa position de fixation.

FIG 1

FIG 2

FIG 3